(19) Europäisches Patentamt
European Patent Office
Office européen des brevets

(11) **EP 4 140 681 A1**

(12) **EUROPEAN PATENT APPLICATION**

(43) Date of publication:
**01.03.2023 Bulletin 2023/09**

(21) Application number: **22190036.8**

(22) Date of filing: **11.08.2022**

(51) International Patent Classification (IPC):
**B29B 17/02** $^{(2006.01)}$     **B29L 9/00** $^{(2006.01)}$

(52) Cooperative Patent Classification (CPC):
**B29B 17/02;** B29B 2017/0217; B29B 2017/0289;
B29L 2009/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2021 JP 2021137891**

(71) Applicant: **DIC Corporation**
**Tokyo 174-8520 (JP)**

(72) Inventor: **SENTE, Yasuhiro**
**Itabashi-ku**
**Tokyo 174-8520 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **RECYCLING METHOD FOR A PLASTIC FILM LAMINATE, RECYCLED PLASTIC PROCESSING MATERIAL USING A PLASTIC FILM LAMINATE, AND METHOD FOR PRODUCING THE SAME**

(57)     Provided are a recycling method which can easily separate a plastic film laminate into individual single layers and recover the layers, a recycled plastic processing material which can be processed into a high-quality recycled plastic from a plastic film laminate, and a method for producing the recycled plastic processing material. A recycling method for a laminate, which includes crushing a plastic film laminate having at least two layers in water or a cleaning agent simultaneously with conducting pumping so that the crushed material obtained by crushing the laminate has a surface roughness of 0.7 μm or more.

EP 4 140 681 A1

**Description**

TECHNICAL FIELD

The present invention relates to a recycling method for a plastic film laminate, a recycled plastic processing material using a plastic film laminate, and a method for producing the same.

BACKGROUND ART

Currently, the recycling ratio of the plastic waste that is sorted and recovered is 9% of the plastics produced worldwide. 91% corresponding to the plastics which are disposed of as waste is made up of 12% for those which are treated by incineration, and 79% for those which are treated by landfill or released to the environment (NTL 1). According to Plastic Waste Management Institute and Monthly Report of Current Production Statistics, Ministry of Economy, Trade and Industry (November in 2020), in Japan, among 8,500,000 tons/year of waste plastics (100%), 1,860,000 tons/year (22%) of waste plastics are recycled by material recycling and 270,000 tons/year (3%) are recycled by chemical recycling, and the energy recovery is 7,260,000 tons/year (61%). Further, the recycling ratio of PET (or plastic) bottles in Japan is about 89% of the shipped PET bottles, and 510,000 tons/year of PET bottles are subjected to material recycling. On the other hand, the recycling ratio of packaging films is as low as about 8.5%, which corresponds to 240,000 tons/year.
One of the reasons why the recycling ratio of the packaging film remains low is that the system for sorting and recovering the packaging film having layers laminated has difficulty. For recycling plastics, waste plastics having unified different types of plastic materials, such as polyethylene (PE) and polypropylene (PP), must be separated into the individual materials and recovered. However, in many plastic products including a laminated film, different plastic materials are bonded and laminated together, and hence it is difficult to separate the plastic products into individual materials and to recover each material.
Further, from the viewpoint of the cost, it is difficult to obtain recycled plastic products which are the same as the products before recycled, and basically, recycling causes the plastic products to deteriorate, and hence products having reduced quality are inevitably obtained. The reason that the recycled plastics have quality reduced, for example, resides in that an ink and a pigment are mixed as impurities into the plastics. For example, when the recovered plastic product is formed from a single material which is an olefin resin as a main component, vinyl chloride or a foaming agent is removed by specific gravity separation, and then a resin having an olefin as a main component is repelletized to produce a recycled product. However, when the recovered plastic product has inks mixed thereinto, the colors of the inks are mixed so that the resultant recycled plastic is colored dark green or the like, and therefore the recycled plastic is inevitably on sale as products which cannot be desirably colored or products which are colored black. In addition, the ink used in printing is burned upon molding to cause the molded article to generate strong odor, and thus markedly lowers the value of the product. Further, the ink component is dispersed in repellets, and thus the impurities serve as a starting point of deterioration, so that only plastics which have deteriorated in physical properties are obtained.
However, many plastic products have the surface processed by printing, and it is difficult to decolor the plastic products in the recycling process, and, as a result, recycled plastic products are colored. Such recycled plastics containing a pigment, an ink, and the like markedly lower the value of the resultant products due to being colored, and further the impurities serve as a starting point of deterioration, so that only plastics which have deteriorated in physical properties are obtained.
With respect to the printed materials, PTLs 1 to 3 disclose a method for removing an ink from the surface of a rolled film.

CITATION LIST

NON PATENT LITERATURE

NTL 1: Science Advances 19 Jul 2017: Vol. 3, no. 7, e1700782

PATENT LITERATURE

PTL 1: JP-T-2015-520684 (the term "JP-T" as used herein means a published Japanese translation of a PCT patent application)
PTL 2: JP-T-2016-509613
PTL 3: JP-T-2018-514384

## SUMMARY OF INVENTION

However, the methods described in PTLs 1 to 3 are a method for removing an ink from a rolled film, and therefore cannot deal with any materials other than the rolled film. That is, the recovered waste plastics have mixed together materials in a rolled film form and other various types of materials, and thus the methods described in PTLs 1 to 3 cannot be easily applied to waste plastic films containing a variety of materials.

Particularly, in recent years, as the packaging materials are diversified, there are increasing demands on improvements of the function of the packaging materials, the adhesion of the ink film to the plastic substrate, and the design properties of the printed material. Consequently, the types of the packaging materials and inks are being further increased, and simultaneously, release of the ink layer is becoming more difficult. For example, with respect to the laminated film having a plurality of films laminated, or the laminate obtained by forming a printing layer on a film and then laminating another film or the like on the printing layer through an adhesive layer, in the case of a laminated film in which a printing layer is formed between a plurality of films (backing printing), the films must be separated for removing the printing layer, and thus the ink cannot be removed by the method described in PTLs 1 to 3, and release of the ink layer is more difficult. A method which can release the ink film from plastic films having a variety of constructions is desired.

Further, in the packaging film having layers laminated as mentioned above, different plastic materials are bonded and laminated together, and hence it is necessary to separate the laminated plastic materials into individual materials and to recover each material, and therefore a method which enables easy separation of the different plastics and recovery thereof is desired.

Accordingly, a task to be achieved by the present invention is to provide a recycling method which can easily separate a plastic film laminate into individual single layers and recover the layers, a recycled plastic processing material which can be processed into a high-quality recycled plastic from a plastic film laminate, and a method for producing the recycled plastic processing material.

The present inventors have conducted extensive and intensive studies with a view toward solving the above-mentioned problems. As a result, it has been found that when a laminated film is crushed or beaten under wet conditions, that is, strong crumpling stimuli are applied to the laminated film so that the laminated film has a specific surface roughness value, the laminated film can be easily separated into individual single layers and recovered, and the recovered crushed material can be used as a raw material for a high-quality recycled plastic.

Specifically, the present invention provides a recycling method for a laminate, which includes crushing a plastic film laminate having at least two layers in water or a cleaning agent simultaneously with conducting pumping so that the crushed material obtained by crushing the laminate has a surface roughness Sa of 0.7 $\mu$m or more.

Further, the present invention provides a method for producing a recycled plastic processing material, which includes crushing a laminate having at least a plastic film layer and a layer selected from a plastic film layer, a deposited film layer, and a metal foil layer in water or a cleaning agent simultaneously with conducting pumping so that the crushed material obtained by crushing the laminate has a surface roughness Sa of 0.7 $\mu$m or more, and a recycled plastic processing material which is obtained by the above-mentioned method.

By the present invention, a plastic film laminate having a plurality of layers can be easily separated into individual single layers and recovered. Further, with respect to the laminate having a printing layer formed between a plurality of films (backing printing), the ink layer can be easily removed. Therefore, the recycling method of the invention is advantageous in that a recycled plastic of high quality can be obtained by a simple method, improving the recycling ratio.

The crushed material obtained by the recycling method of the invention is a single-layer material which has been separated from a plurality of materials constituting the laminate and recovered, and from which the printing layer has been removed, and therefore the obtained crushed material can be used as a material for processing high-quality recycled plastic pellets.

## DESCRIPTION OF EMBODIMENTS

In the method for producing recycled plastic pellets of the present invention, a plastic film having formed thereon an ink layer (waste plastic) is first crushed in water or a cleaning agent simultaneously with conducting pumping, so that the ink is removed from the plastic film, obtaining the crushed material of the plastic film.

The method of crushing the plastic film in water or a cleaning agent simultaneously with conducting pumping can be performed using a wet crushing system described below.

(Wet crushing system)

The wet crushing system used in the method for producing recycled plastic pellets of the invention is a wet crusher which can simultaneously perform crushing, dispersing, mixing, and pumping with respect to a solid material in a liquid. Specifically, preferred is a crusher having a mechanism that crushes the solid material in a liquid by shearing force and/or frictional force, and preferred is a crusher having a mechanism that further can crush the plastic film laminate and pump the crushed laminate. Examples of such wet crushers include a wet crushing pump, a colloid mill, a beater, and a refiner.

(Wet crushing pump)

The wet crushing pump used in the invention preferably has a mechanism that crushes a solid material by means of a fixed blade and a rotating blade while pumping the solid material in a liquid, and a more preferred mechanism is a mechanism that crushes a solid material on three stages using a combination of four parts, i.e., a cutting blade, a crushing vane, a shroud ring, and a grid.

The wet crushing pump crushes the plastic film laminate on three stages. The plastic film laminate is roughly cut by the cutting blade which is the fixed blade and an edge at the inlet of the crushing vane which is the rotating blade, and then stirred and pumped by an axial flow crushing vane, and part of the plastic film laminate is cut by the blade portion of the shroud ring which is the fixed blade. The laminated film which has passed through the crushing vane is further finely crushed and stirred before the grid, and passes through the grid and is pressurized by a pressure vane to be pumped to the next step.

With respect to the pumping speed, there is no particular limitation, but, taking into consideration the release and separation efficiency for releasing the ink layer and separating the plastic film laminate into individual layers, the pumping speed is preferably 0.03 m$^3$/min or more. With respect to the upper limit of the pumping speed, there is no particular limitation, and the normal operation speed of an apparatus, for example, 1.4 m$^3$/min is enough to release the ink and separate the plastic film laminate into individual single layers.

With respect to the grid form, there is no particular limitation. The grid pore diameter affects the size of the laminated film obtained after crushed, and therefore the grid pore diameter is preferably 0.1 to 50 mm, and, taking into consideration the crushing efficiency or the size of the laminated film obtained after crushed, the grid pore diameter is more preferably 1 to 20 mm.

Specific examples of the wet crushing pumps include KD series, manufactured by Husqvarna Zenoah Co., Ltd.; SUNCUTTER series, manufactured by Nikuni Co., Ltd.; Disintegrator series, manufactured by Furukawa Industrial Machinery Systems Co., Ltd.; Incrusher series, manufactured by Aikawa Iron Works Co., Ltd.; and Scatter, manufactured by Sanwa Hydrotech Corporation.

(Colloid mill)

The colloid mill used in the invention is a machine which is used for reducing the size of particles in a dispersion system in which the particles are suspended in a liquid. The colloid mill is composed of a combination of a rotor and a stator, wherein the rotor rotates round the fixed stator at a high speed. The colloid mill is used for reducing the size of particles in a liquid due to high level shearing caused by high-speed rotation.

A milling portion of the colloid mill is composed of a combination of a rotor having a truncated cone shape in a tooth form and a stator, wherein the rotor and the stator have a tapered form that becomes gradually narrower at the discharge outlet. The laminated film is milled in the gap in a ring form that becomes gradually narrower at the discharge outlet by repeatedly applying thereto strong shearing, compression, and impact.

With respect to the specific colloid mill, there is no particular limitation as long as it is a dispersing machine generally called a colloid mill, but examples include Colloid mill MK series of IKA; WCM series of Iwaki Co., Ltd.; PUC Colloid mill series of Mountech Co., Ltd.; and Cavitron of Eurotec Co., Ltd.

(Grinding mill)

The grinding mill used in the invention is a machine which is used for grinding a solid material in a system in which the solid material is suspended in a liquid, and has a function and appearance like a food processor. The grinding mill in the invention is used for reducing the size of a solid material in a liquid due to high level shearing caused by high-speed rotation of the rotating blade. The laminate is vigorously stirred in the water flow, and hence the laminate is likely to affected by strong stimuli, such as being crumpled, beaten, twisted, and compressed, and thus the grinding mill is effective in increasing the surface roughness.

With respect to the specific grinding mill, there is no particular limitation as long as it is a machine which is operated in a batch-wise manner and capable of grinding a solid material in a liquid by a rotating blade, but examples include MultiDrive series of IKA; and Mighty Blender series, Waring series, and Blender series of Osaka Chemical Co., Ltd.

(Beater or refiner)

The beater or refiner used in the invention preferably has a mechanism that beats or grinds a solid material (laminate) by applying strong compressive force and shearing force to the solid material using a rotator having embedded a stiff blade. The crushed material obtained after beating or grinding is as such pumped due to compressive force and recovered.

With respect to the beater or refiner, a known beater or refiner capable of refining or beating pulp or the like can be used. For example, a plurality of blades rotate, and the laminate is introduced into a narrow gap of about 0.5 mm between a blade and another one and is likely to affected by strong stimuli, such as being crumpled, beaten, twisted, and compressed, and thus the beater or refiner is effective in increasing the surface roughness.

Specific examples of the beaters or refiners include Disc Refiner, manufactured by Aikawa Iron Works Co., Ltd.; and Beatfiner, manufactured by Satomi Manufacturing Co., Ltd.

By crushing the laminated film in water using the wet crusher as mentioned above, the laminated film having two or more layers can be separated into individual single layers. An ink layer is generally formed by printing an organic solvent printing ink or an aqueous or active energy ray curing ink using a gravure printer, a flexographic printer, an offset printer, an inkjet printer, or the like. With respect to the plastic film laminate having such an ink layer formed thereon, the plastic film laminate may be crushed in a cleaning agent for more efficiently releasing or removing the ink layer. By crushing the plastic film laminate in a cleaning agent, release or removal of the ink layer formed on the plastic film, which is a laminate, and separation of the plastic film laminate into individual single layers can be simultaneously achieved. For example, the ink that is most widely used in the plastic laminated film for food packaging and the like includes a gravure ink and a flexographic ink, and the printing ink layer can be effectively released or removed in the wet crushing step using a cleaning agent. Further, the laminated film may have laminated thereon a foil of a metal, such as aluminum, or a deposited film, and, in the present invention, the metal foil and the deposited film can be released or dissolved.

In the invention, the plastic film laminate is subjected to crushing treatment in water or a cleaning agent so that the crushed material obtained by crushing the laminate has a surface roughness Sa of 0.7 $\mu$m or more. By obtaining the crushed material having a surface roughness Sa of 0.7 $\mu$m or more using the above-mentioned wet crushing system, the plastic film laminate can be separated into individual single layers, and further not only the ink layer formed on the surface of the plastic film laminate but also the ink layer formed between the layers of the laminate can be removed, and therefore the recovered crushed material is advantageously used as a raw material for producing a high-quality recycled plastic.

The surface roughness Sa of the crushed material is 0.7 $\mu$m or more, preferably 0.8 $\mu$m or more, more preferably 0.9 $\mu$m or more. On the other hand, the upper limit of the surface roughness Sa is not particularly limited, and can be appropriately controlled according to the conditions for the wet crushing system.

The surface roughness Sa of the film is determined by measuring a surface roughness Sa with respect to an area of 500 $\mu$m $\times$ 600 $\mu$m using a white light interferometric microscope, manufactured by Ryoka Systems Inc. Sa is not a value determined from a cross-section like Ra but a value which indicates a roughness of the entire area of the measured surface, and therefore the range of the surface evaluated by Sa is such wide that overall surface roughness can be evaluated. The surface roughness of the plastic crushed material may be measured.

In the invention, with respect to the size of the crushed material obtained by crushing the laminate, the length in the long-side direction is preferably 20 mm or less, more preferably 10 mm or less, further preferably 5 mm or less. Further, the length in the short-side direction is preferably 20 mm or less, preferably 10 mm or less, preferably 5 mm or less, preferably 3 mm or less. With respect to the lower limit of the size of the crushed material, there is no particular limitation, but, when the size is too small, the recovery is lowered, and therefore the length in the short-side direction is preferably 1 mm or more.

In the crushing using the wet crusher, crushing may be conducted using water as such, or crushing may be conducted using a cleaning agent containing a cleaning or release component, such as an inorganic base or a surfactant, or another component in water (below-mentioned cleaning agent 1). Further, with respect to the cleaning agent, crushing may be conducted using a cleaning agent containing a water-soluble solvent and an inorganic base (below-mentioned cleaning agent 2).

(Recovery system)

With respect to the system or method for recovering the ink layer or the plastic substrate obtained after removing the ink layer, there is no particular limitation, but, for example, a filtration apparatus, a centrifugal separator, an automatic scoop bar screen, a tilting wire screen, or a rotating drum screen can be used.

(Cleaning agent 1)

With respect to the cleaning agent 1, water containing one of or an appropriate combination of the below-mentioned components can be used.

(Inorganic base)

With respect to the aqueous cleaning liquid usable in the wet crushing step, water containing an inorganic base can be used. Specific examples of the inorganic bases include sodium hydroxide and potassium hydroxide. The inorganic base is contained at a concentration of 0.1 to 10% by mass, more preferably a concentration of 0.1 to 5% by mass, based on the total mass of the aqueous cleaning liquid. Further, pH of the aqueous cleaning liquid is preferably 10 or more.

(Surfactant)

With respect to the aqueous cleaning liquid usable in the wet crushing step, water containing a surfactant can be used. With respect to the surfactant, there is no particular limitation, and a known surfactant can be used, but examples include an anionic surfactant, a nonionic surfactant, an ampholytic surfactant, and a cationic surfactant.

As examples of the nonionic surfactants, generally, there can be mentioned polyoxyalkylene alkyl ether, polyoxyethylene alkyl ether, polyoxyethylene alkyl phenyl ether, polyoxyethylene fatty acid ester, sorbitan fatty acid ester, polyoxyethylene sorbitan fatty acid ester, polyoxyethylene sorbitol fatty acid ester, glycerol fatty acid ester, polyoxyethylene glycerol fatty acid ester, polyglycerol fatty acid ester, sucrose fatty acid ester, polyoxyethylene alkylamine, polyoxyethylene fatty acid amide, fatty acid alkylolamide, alkylalkanolamide, acetylene glycol, an oxyethylene addition product of acetylene glycol, and a polyethylene glycol-polypropylene glycol block copolymer, and, of these, there can be mentioned polyoxyethylene nonyl phenyl ether, polyoxyethylene octyl phenyl ether, polyoxyethylene dodecyl phenyl ether, polyoxyethylene alkyl ether, polyoxyethylene fatty acid ester, sorbitan fatty acid ester, polyoxyethylene sorbitan fatty acid ester, fatty acid alkylolamide, acetylene glycol, an oxyethylene addition product of acetylene glycol, and a polyethylene glycol-polypropylene glycol block copolymer.

In the invention, preferred is an aqueous cleaning liquid containing water in an amount of 50% by mass or more and a polyoxyalkylene alkyl ether surfactant, which contains at least one compound represented by the general formula (1), in an amount of 0.01 to 5% by mass.

$$R^1\text{-O-}[CH_2\text{-CH}(X^1)\text{-O}]n^1\text{-H} \qquad (1)$$

In the general formula (1), $R^1$ represents a linear or branched alkyl group or alkenyl group or an octylphenol group, $n^1$ represents an average addition molar number, and $X^1$ represents hydrogen or a short-chain alkyl group.

Further preferably, in the general formula (1), $R^1$ is preferably a linear or branched alkyl group or alkenyl group having 10 or more carbon atoms. When the number of carbon atoms of the group is more than 10 or is larger, excellent ink releasing properties are advantageously achieved. With respect to the specific number of carbon atoms, examples of groups include a decyl group which has 10 carbon atoms, a lauryl group which has 12 carbon atoms, a tridecyl group which has 13 carbon atoms, a myristyl group which has 14 carbon atoms, a cetyl group which has 16 carbon atoms, and an oleyl group and a stearyl group, which have 18 carbon atoms.

As examples of specific products, there can be mentioned NOIGEN series, DSK NL-Dash series, DKS-NL series, manufactured by Dai-ichi Kogyo Seiyaku Co., Ltd.; NONION series, manufactured by NOF Corporation; EMULGEN series, manufactured by Kao Corporation; LEOX series, LEOCOL series, LIONOL series, manufactured by Lion Specialty Chemicals Co., Ltd.; and the like, which correspond to the nonionic surfactants represented by the general formula (1) wherein $R^1$ has 10 or more carbon atoms, but the nonionic surfactant is not limited to these examples.

With respect to an HLB value of the polyoxyalkylene alkyl ether surfactant represented by the general formula (1) above, there is no particular limitation. The term "HLB value" means a value which indicates the degree of affinity of a surfactant with water and an oil (organic compound insoluble in water), and which is defined by the Griffin method (HLB value = 20 × Total of the formula weights of hydrophilic portions/Molecular weight).

Specific examples of the nonionic surfactants, which are represented by the general formula (1) above wherein $R^1$ has 10 or more carbon atoms, and which have an HLB value of less than 12.5, include NOIGEN XL-41, NOIGEN LF-40X, NOIGEN TDS-30, NOIGEN TDS-50, NOIGEN TDS-70, NOIGEN TDX-50, NOIGEN SD-30, NOIGEN SD-60, DKS NL-15, DKS NL-30, DKS NL-40, DKS NL-50, DKS NL-60, DKS NL-70, NOIGEN ET-83, NOIGEN ET-102, DSK Dash 400, DSK Dash 403, DSK Dash 404, DSK Dash 408, NOIGEN LP-55, NOIGEN LP-70, NOIGEN ET-65, NOIGEN ET-95, NOIGEN ET-115, NOIGEN ET-69, NOIGEN ET-89, NOIGEN ET-109, NOIGEN ET-129, NOIGEN ET-149, manufactured by Dai-ichi Kogyo Seiyaku Co., Ltd.; NONION K-204, PERSOFT NK-60, NONION P-208, NONION P-210, NONION E-202, NONION E-202S, NONION E-205, NONION E-205S, NONION S-202, NONION S-207, NONION EH-204, NONION ID-203, NONION HT-505, NONION HT-507, NONION HT-510, NONION HT-512, manufactured by NOF Corporation; EMULGEN 102KG, EMULGEN 103, EMULGEN 104P, EMULGEN 105, EMULGEN 106, EMULGEN 108, EMULGEN 210P, EMULGEN 404, EMULGEN 408, EMULGEN 409PV, EMULGEN 705, EMULGEN 707, manufactured by Kao Corporation; and LEOX CL-30, LEOX CL-40, LEOX CL-50, LEOX CL-60, LEOCOL NL-30C, LEOCOL TD-50, LEOCOL TD-70, LEOCOL SC-50, LEOCOL SC-70, manufactured by Lion Specialty Chemicals Co., Ltd., but the nonionic surfactant is not limited to these examples.

Further, specific examples of the nonionic surfactants, which are represented by the general formula (1) wherein $R^1$ represents a linear or branched alkyl group or alkenyl group having 10 or more carbon atoms, and which have an HLB value of 12.5 or more, include NOIGEN XL-61, NOIGEN XL-6190, NOIGEN XL-70, NOIGEN XL-80, NOIGEN XL-100, NOIGEN XL-140, NOIGEN XL-160, XL-400D, NOIGEN XL-1000, NOIGEN LF-60X, NOIGEN LF-80X, NOIGEN LF-100X, NOIGEN TDS-80, NOIGEN TDS-100, NOIGEN TDS-120, NOIGEN TDS-200D, NOIGEN TDS-500F, NOIGEN TDX-80, NOIGEN TDX-80D, NOIGEN TDX-100D, NOIGEN TDX-120D, NOIGEN SD-70, NOIGEN SD-80, NOIGEN SD-110, NOIGEN SD-150, DKS NL-80, DKS NL-90, DKS NL-100, DKS NL-110, DKS NL-180, DKS NL-250, DKS NL-450F, DKS NL-600F, NOIGEN ET-160, NOIGEN ET-170, NOIGEN ET-190, DSK Dash 410, NOIGEN LP-80, NOIGEN LP-100, NOIGEN LP-180, NOIGEN ET-135, NOIGEN ET-165, NOIGEN ET-159, NOIGEN ET-189, manufactured by Dai-ichi Kogyo Seiyaku Co., Ltd.; NONION K-220, NONION K-230, NONION K-2100W, PERSOFT NH-90C, PERSOFT NK-100, PERSOFT NK-100C, NONION P-210, NONION P-213, NONION E-212, NONION E-215, NONION E-230, NONION S-215, NONION S-220, NONION B-250, NONION ID-206, NONION ID-209, DISPANOL TOC, NONION HT-515, NONION HT-518, manufactured by NOF Corporation; EMULGEN 109P, EMULGEN 120, EMULGEN 123P, EMULGEN 130K, EMULGEN 147, EMULGEN 150, EMULGEN 220, EMULGEN 320P, EMULGEN 350, EMULGEN 420, EMULGEN 430, EMULGEN 709, EMULGEN 1108, EMULGEN 1118S-70, EMULGEN 1135S-70, EMULGEN 1150S-60, EMULGEN 4085, EMULGEN 2020G-HA, EMULGEN 2025G, manufactured by Kao Corporation; and LEOX CL-90, LEOX CL-230, LEOCOL TD-90, LEOCOL TD-90D, LEOCOL TDA-90-25, LEOCOL TDN-90-80, LEOCOL TD-120, LEOCOL TD-200, LEOCOL TDA-400-75, LEOCOL SC-80, LEOCOL SC-90, LEOCOL SC-120, LEOCOL SC-150, LEOCOL SC-200, LEOCOL SC-300, LEOCOL SC-400, manufactured by Lion Specialty Chemicals Co., Ltd., but the nonionic surfactant is not limited to these examples.

When $R^1$ in the general formula (1) is an octylphenol group, preferred is octyl phenol ethoxylate.

Examples of specific products include TRITON (registered trademark) series of The Dow Chemical Company, Igepal CA series of Rhodia Solvay Group, Nonidet P series of Shell Chemicals, and Nikkol OP series of Nikko Chemicals Co., Ltd., but the product is not limited to these examples.

The ampholytic surfactant is, specifically, preferably a betaine ampholytic surfactant, more preferably contains an ampholytic surfactant, for example, having an alkylcarboxybetaine skeleton or alkylamidecarboxybetaine skeleton containing at least one compound represented by the following general formula (2a):

$$R1\text{-}R2\text{-}N^+(CH_3)_2\ CH_2\ COO^- \qquad (2a)$$

wherein, in the general formula (2a), R1 represents hydrogen or C(=O)R3-NH- (wherein R3 represents a linear or branched alkyl group or alkenyl group), and R2 represents an alkylene group or an alkenylene group.

In the general formula (2a), R1 preferably represents a hydrogen atom.

The compound represented by the general formula (2a) is preferably an ampholytic surfactant having an alkylcarboxybetaine skeleton represented by the following general formula (2a-1):

$$C_n H_{2n+1} N^+ (CH_3)_2 CH_2 COO^- \qquad (2a\text{-}1)$$

wherein, in the general formula (2a-1), n represents an average addition molar number.

In the general formula (2a-1), n is preferably 8 or more, preferably 10 or more, preferably 11 or more.

Examples of specific products corresponding to the general formula (2a) include NISSAN ANON BDF (registered trademark)-R, NISSAN ANON BDF (registered trademark)-SF, NISSAN ANON BDC-SF, NISSAN ANON BDL-SF, manufactured by NOF Corporation; AMOGEN CB-H, AMOGEN HB-C, manufactured by Dai-ichi Kogyo Seiyaku Co., Ltd.; RIKABION B-200, RIKABION B-300, manufactured by New Japan Chemical Co., Ltd.; and Obazolin CAB-30, Obazolin ISAB, manufactured by Toho Chemical Industry Co., Ltd. Further, examples of specific products corresponding to the general formula (2a-1) include AMOGEN S, AMOGEN S-H, AMOGEN K, manufactured by Dai-ichi Kogyo Seiyaku Co., Ltd.; AMPHITOL 20BS, AMPHITOL 24B, AMPHITOL 86B, manufactured by Kao Corporation; NISSAN ANON BF, NISSAN ANON BL, NISSAN ANON BL-SF, manufactured by NOF Corporation; RIKABION A-100, RIKABION A-200, RIKABION A-700, manufactured by New Japan Chemical Co., Ltd.; and Obazolin LB, Obazolin LB-SF, manufactured by Toho Chemical Industry Co., Ltd., but the product is not limited to these examples.

Further, the betaine ampholytic surfactant may be one which has an imidazolinium betaine skeleton, and examples of specific products of such a betaine ampholytic surfactant include NISSAN ANON GLM-R, NISSAN ANON GLM-R-LV, manufactured by NOF Corporation; and AMPHITOL 20Y-B, manufactured by Kao Corporation, but the product is not limited to these examples.

Further, the ampholytic surfactant may be a surfactant represented by the following general formula (2b):

$$R4\text{-}(NHC_2H_4)_{nb}\text{-}N(R5)_2 \qquad (2b)$$

wherein, in the general formula (2b), R4 represents a linear or branched alkyl group or alkenyl group, nb represents an integer of 0 to 5, and R5 represents hydrogen, $-CH_2COONa$, or $-CH_2COOH$, and the two R5's may be the same or different, and at least one R5 represents $-CH_2COONa$.

In the general formula (2b), R4 preferably represents a linear alkyl group, and R4 preferably has 8 or more carbon atoms, preferably has 10 or more carbon atoms, preferably has 12 or more carbon atoms.

Examples of specific products corresponding to the general formula (2b) include NISSAN ANON LG-R, NISSAN ANON LA, manufactured by NOF Corporation, but the product is not limited to these examples.

Further, the ampholytic surfactant may be an amine oxide surfactant represented by the following general formula (2c):

$$R6\text{-}N^+(CH_3)_2O^- \qquad (2c)$$

wherein, in the general formula (2c), R6 represents a linear or branched alkyl group or alkenyl group.

In the general formula (2c), R6 preferably represents a linear alkyl group, and R6 preferably has 8 or more carbon atoms, preferably has 10 or more carbon atoms, preferably has 12 or more carbon atoms.

Examples of specific products corresponding to the general formula (2c) include AMOGEN AOL, manufactured by Dai-ichi Kogyo Seiyaku Co., Ltd.; and AMPHITOL 20N, manufactured by Kao Corporation, but the product is not limited to these examples.

The cationic surfactant is, specifically, preferably a cationic surfactant having a quaternary ammonium skeleton, more preferably contains a cationic surfactant, for example, having a quaternary ammonium skeleton containing at least one compound represented by the following general formula (3a):

$$R1\text{-}N^+(R2R3)\text{-}R4 \qquad (3a)$$

wherein, in the general formula (3a), R1 represents a linear or branched alkyl group or a linear or branched alkenyl group, wherein $-CH_2-$ in the alkyl group or alkenyl group may be substituted by $-C(=O)-$, $-NH-$, or $-C(=O)-NH-$, R2 and R3 represent a hydrogen atom, a linear or branched alkyl group, or a linear or branched alkenyl group, and R4 represents a hydrogen atom, a linear or branched alkyl group, a linear or branched alkenyl group, or a phenyl group, wherein $-CH_3$ at the terminal of the alkyl group or alkenyl group may be substituted by a carboxyl group or a phenyl group.

In the general formula (3a), R1 is preferably a long-chain alkyl group or alkenyl group for further improving the ink releasing properties, specifically, preferably an alkyl group or alkenyl group having 8 to 30 carbon atoms, preferably an alkyl group having 10 to 25 carbon atoms, preferably an alkyl group or alkenyl group having 12 to 22 carbon atoms. The alkyl group or alkenyl group may be linear or branched, but is preferably linear, more preferably a linear alkyl group.

In R1, at least one $-CH_2-$ in the alkyl group or alkenyl group may be substituted by $-C(=O)-$, $-NH-$, or $-C(=O)-NH-$. Especially, at least one $-CH_2-$ in the alkyl group or alkenyl group is preferably substituted by $-C(=O)-NH-$ or $-NH-C(=O)-$, and one $-CH_2-$ in the alkyl group is preferably substituted by $-C(=O)-NH-$ or $-NH-C(=O)-$, and R1 more preferably has therein an amidopropyl skeleton.

R2 and R3 preferably represent a linear or branched alkyl group or a linear or branched alkenyl group, preferably a linear or branched alkyl group. Especially, R2 and R3 preferably represent a linear alkyl group having 1 to 3 carbon atoms, more preferably a methyl group.

R4 preferably represents a linear or branched alkyl group, a linear or branched alkenyl group, or a phenyl group, more preferably a linear or branched alkyl group. Further, $-CH_3$ at the terminal of the alkyl group or alkenyl group is preferably substituted by a carboxyl group or a phenyl group.

R4 preferably has 1 to 8 carbon atoms, preferably has 1 to 5 carbon atoms, preferably has 1 to 3 carbon atoms, more preferably has 1 or 2 carbon atoms.

When R4 represents a methyl group, R2 and R3 preferably also represent a methyl group, that is, the general formula (3a) preferably represents an alkyltrimethylammonium skeleton.

Further, when R4 represents an ethyl group, $-CH_3$ at the terminal of the ethyl group is preferably substituted by a carboxyl group or a phenyl group. That is, R4 preferably represents $-CH_2-(C(=O)OH$ or a benzyl group.

The compound represented by the general formula (3a) is preferably a cationic surfactant having a quaternary ammonium skeleton represented by the following general formula (3a-1):

$$C_n H_{2n+1} N^+ (CH_3)_2 R4 \qquad (3a\text{-}1)$$

wherein, in the general formula (3a-1), n represents an average addition molar number, and R4 is as defined above for R4 in the general formula (3a).

In the general formula (3a-1), the number of carbon atoms indicated by n is preferably 8 or more. When the number of carbon atoms is more than 8 or is larger, excellent ink releasing properties are advantageously achieved. With respect to the specific number of carbon atoms, examples of groups include an octyl group which has 8 carbon atoms, a nonyl group which has 9 carbon atoms, a decyl group which has 10 carbon atoms, an undecyl group which has 11 carbon atoms, a lauryl group which has 12 carbon atoms, a tridecyl group which has 13 carbon atoms, a myristyl group which has 14 carbon atoms, a pentadecyl group which has 15 carbon atoms, a cetyl group which has 16 carbon atoms, and an oleyl group and a stearyl group, which have 18 carbon atoms.

Preferred groups of R4 are similar to those for the general formula (3a).

The cationic surfactant having a quaternary ammonium skeleton preferably forms a salt together with a halogen to be of a quaternary ammonium skeleton salt type, and preferably forms a salt together with Cl⁻, more preferably forms a salt together with Br⁻, further preferably forms a salt together with I⁻. The quaternary ammonium skeleton salt that forms a salt together with a halogen promotes hydrolysis of an ink film by the nucleophilic action of the halogen, and therefore is considered to improve the ink releasing properties.

Especially, an alkyltrimethylammonium chloride compound, a dialkyldimethylammonium chloride compound, and an alkylbenzalkonium chloride compound are preferred.

Examples of specific products corresponding to the general formula (3a) or (3a-1) include NISSAN CATION MA, NISSAN CATION SA, NISSAN CATION BB, NISSAN CATION FB, NISSAN CATION PB-300, NISSAN CATION ABT2-500, NISSAN CATION AB, NISSAN CATION AB-600, NISSAN CATION VB-M flakes, NISSAN CATION VB-F, NISSAN CATION 2-DB-500E, NISSAN CATION 2-DB-800E, NISSAN CATION 2ABT, NISSAN CATION 2-OLR, NISSAN CATION $F_2$-50R, NISSAN CATION $M_2$-100R, manufactured by NOF Corporation; CATIOGEN TML, CATIOGEN TMP, CATIOGEN TMS, CATIOGEN DDM-PG, CATIOGEN BC-50, CATIOGEN TBB, manufactured by Dai-ichi Kogyo Seiyaku Co., Ltd.; QUARTAMIN 24P, QUARTAMIN 86P conc., QUARTAMIN 60W, QUARTAMIN 86W, SANISOL C, SANISOL B-50, manufactured by Kao Corporation; and LIPOQUAD C-50, LIPOQUAD T-28, LIPOQUAD T-30, LIPOQUAD T-50, LIPOQUAD T-800, LIPOQUAD 16-29, LIPOQUAD 16-50E, LIPOQUAD 18-63, LIPOQUAD 22-80, LIPOQUAD CB-50, LIPOQUAD 210-80E, LIPOQUAD 2C-75, LIPOQUAD 2HP-75, LIPOQUAD 2HP flakes, LIPOQUAD 2HT-75, LIPOQUAD 2HT flakes, LIPOQUAD 20-751, LIPOQUAD 41-50, TMAC-50, TPAH-40, TBAB-50A, TBAB-100A, TBAH-40, LIPOQUAD PH-100, BTMAC-50, BTMAC-100A, BTEAC-50, BTEAC-100A, BTBAC-50A, manufactured by Lion Specialty Chemicals Co., Ltd., but the product is not limited to these examples.

Further, the cationic surfactant preferably contains at least one compound represented by a primary or secondary alkanolamine skeleton, and preferably contains at least one compound represented by a monoalkanolamine skeleton.

The primary monoalkanolamine is preferably a lower alkanol having 1 to 4 carbon atoms, and, specifically, examples include monoethanolamine and 2-aminoisobutanol, and examples of secondary monoalkanolamines include N-methylethanolamine, 2-ethylaminoethanol, and isopropanolamine, but substances other than the examples mentioned above can be appropriately used. Further, these monoalkanolamine compounds can be used individually or in appropriate combination, and can be used in the form of a mixture with water.

The cationic surfactant having a monoalkanolamine skeleton preferably forms a salt together with a halogen to be of a monoalkanolamine salt type, and preferably forms a salt together with Cl⁻.

These surfactants can be used individually or in combination. The amount of the surfactant added is preferably in the range of 5% by mass or less, preferably 2% by mass or less, based on the total mass of the aqueous cleaning liquid. The lower limit of the amount of the surfactant added is not particularly limited, and may be 0% by mass, but, when a surfactant is contained, the amount of the surfactant added is preferably 0.1% by mass or more.

(Alkylene glycol alkyl ether solvent)

With respect to the cleaning liquid usable in the wet crushing step, an alkylene glycol alkyl ether solvent can be used. Specifically, water containing an alkylene glycol alkyl ether solvent is preferably used, and preferred is a cleaning liquid containing a solvent having an alkylene glycol alkyl ether skeleton represented by the following general formula (4) in an amount of 20% by mass or more:

$$R^1\text{-O-}[CH_2\text{-CH(X)-O}]n^1\text{-}R^2 \qquad (4)$$

wherein, in the general formula (4), $R^1$ represents an alkyl group having 1 or more carbon atoms, $R^2$ represents an alkyl group having 1 or more carbon atoms or hydrogen, $n^1$ represents an integer of 1 to 3, and X represents hydrogen or a methyl group.

The alkylene glycol alkyl ether represented by the general formula (4) is further preferably a water-soluble alkylene glycol alkyl ether.

Examples of the water-soluble alkylene glycol alkyl ethers represented by the general formula (4) include ethylene glycol monomethyl ether, ethylene glycol monoethyl ether, ethylene glycol monopropyl ether, ethylene glycol monobutyl ether, ethylene glycol dimethyl ether, ethylene glycol diethyl ether, ethylene glycol dipropyl ether, ethylene glycol methyl ethyl ether, ethylene glycol methyl propyl ether, ethylene glycol ethyl propyl ether, ethylene glycol monobutyl ether, ethylene glycol tert-butyl ether, diethylene glycol monomethyl ether, diethylene glycol monoethyl ether, diethylene glycol monopropyl ether, diethylene glycol monobutyl ether, diethylene glycol dimethyl ether, diethylene glycol diethyl ether, diethylene glycol dipropyl ether, diethylene glycol methyl ethyl ether, diethylene glycol methyl propyl ether, diethylene glycol ethyl propyl ether, triethylene glycol monobutyl ether, propylene glycol monomethyl ether, propylene glycol monoethyl ether, propylene glycol monopropyl ether, propylene glycol monobutyl ether, propylene glycol dimethyl ether, and propylene glycol diethyl ether.

These alkylene glycol alkyl ethers can be used individually or in appropriate combination, and can be used in the form of a mixture with water. There is no particular problem as long as the alkylene glycol alkyl ether content is 20% by mass or more, but, when the medium is water, the alkylene glycol alkyl ether content is preferably 30% by mass or more, most preferably 40% by mass or more. On the other hand, the upper limit of the alkylene glycol alkyl ether content may be 100% by mass, but, from the viewpoint of the effect on the environment and safety, water is preferably used as a medium.

The water-soluble alkylene glycol alkyl ether represented by the general formula (4) is further preferably an alkylene glycol monoalkyl ether represented by the following general formula (5):

$$R^2 \text{-O-}[CH_2\text{-}CH(X)\text{-}O]n^2\text{-}H \qquad (5)$$

wherein, in the general formula (5), $R^2$ represents an alkyl group having 1 or more carbon atoms, $n^2$ represents an integer of 1 to 3, and X represents hydrogen or a methyl group.

Examples of the water-soluble alkylene glycol alkyl ethers represented by the general formula (5) include ethylene glycol monomethyl ether, ethylene glycol monoethyl ether, ethylene glycol monopropyl ether, ethylene glycol monobutyl ether, ethylene glycol tert-butyl ether, diethylene glycol monomethyl ether, diethylene glycol monoethyl ether, diethylene glycol monopropyl ether, diethylene glycol monobutyl ether, triethylene glycol monobutyl ether, propylene glycol monomethyl ether, propylene glycol monoethyl ether, propylene glycol monopropyl ether, and propylene glycol monobutyl ether.

Further, with respect to the aqueous cleaning liquid containing the water-soluble alkylene glycol alkyl ether represented by the general formula (5), in view of maintaining the releasing properties even when the cleaning liquid has a composition such that the water content is much more than 50% by mass, preferred is an alkylene glycol alkyl ether of the general formula (5) wherein $R^2$ is an alkyl group having 3 or more carbon atoms, $n^2$ is 1 to 3, and $X^2$ is hydrogen or a methyl group.

Specific examples include ethylene glycol monopropyl ether, ethylene glycol monobutyl ether, ethylene glycol tert-butyl ether, diethylene glycol monopropyl ether, diethylene glycol monobutyl ether, triethylene glycol monobutyl ether, propylene glycol monopropyl ether, and propylene glycol monobutyl ether. These alkylene glycol alkyl ethers can be used individually or in appropriate combination, and can be used in the form of a mixture with water.

Further, of these, from the viewpoint of the environmental properties, flammability, and anti-foaming properties, especially preferred are diethylene glycol monobutyl ether, ethylene glycol mono-tert-butyl ether, and propylene glycol monopropyl ether.

(Anti-foaming agent)

The water used in the wet crushing step may contain an anti-foaming agent. In the step 1, a large amount of foam can be generated in the stirring or crushing step, and, when the foam remains, it is likely that the foam floods out of the system in the recovery step for plastic film. Further, in the crushing step for plastic film, when a large amount of foam is included in the cleaning liquid, it is likely that the plastic substrate cannot be crushed into a desired size.

With respect to the compound generally used as an anti-foaming agent, a water-soluble organic solvent or a nonionic surfactant having a low HLB value is used, but, in view of high anti-foaming ability, an especially preferred compound is a silicone compound. Particularly, an emulsion or self-emulsifiable silicone compound is preferred.

Specific examples of self-emulsifiable anti-foaming agents include X-50-1176, KS-530, KS-537, manufactured by Shin-Etsu Chemical Co., Ltd., and specific examples of emulsion anti-foaming agents include KM-7750D, KM-7752, KM-98, manufactured by Shin-Etsu Chemical Co., Ltd.; and FS Antifoam 025, FS Antifoam 80, FS Antifoam 92, FS Antifoam 93, DKQ1-1183, DKQ1-1247, manufactured by Nagase Chemtex Corporation, but the anti-foaming agent is not limited to these examples.

(Cleaning agent 2)

With respect to the cleaning agent 2, an appropriate combination of at least one of the below-mentioned water-soluble solvents and at least one of the below-mentioned inorganic bases can be used. The cleaning agent 2 may contain water.

(Water-soluble solvent)

The water-soluble solvent preferably contains one or two or more water-soluble alcohol or water-soluble solvent having a flash point of 21°C or higher. When the water-soluble solvent is used in the cleaning agent 2, hydroxide ions generated from the inorganic base contained in the cleaning agent 2 are unlikely to be hydrated, so that the nucleophilicity of hydroxide ions is enhanced, and further it is possible to advance the reaction for release of the ink layer in a hydrophobic environment, and thus the use of the water-soluble solvent is effective in releasing the ink layer.

The water-soluble solvent having a flash point of 21°C or higher is preferably a water-soluble solvent among the organic solvents corresponding to Class II petroleum and Class III petroleum defined by the Fire Service Act. Further, examples of water-soluble alcohols include the alcohols defined by the Fire Service Act. Specific examples of such alcohols include 3-methoxy-3-methyl-1-butanol, diethylene glycol monobutyl ether, and ethanol, and these may be used individually or in combination.

In the cleaning agent 2, the water-soluble solvent is preferably contained in an amount in the range of 20% by mass or more. When the amount of the water-soluble solvent contained is less than 20% by mass, in view of releasing the ink layer, it is difficult to obtain satisfactory effects. From the viewpoint of the releasing properties for the ink layer, the water-soluble solvent is preferably contained in a larger amount in the release agent, specifically, the amount of the water-soluble solvent contained is preferably 30% by mass or more, preferably 40% by mass or more, preferably 50% by mass or more, preferably 60% by mass or more, preferably 70% by mass or more, preferably 80% by mass or more, preferably 90% by mass or more, preferably 95% by mass or more.

(Inorganic base)

With respect to the inorganic base, an inorganic base similar to those mentioned above in connection with the cleaning agent 1 can be used, but specific examples include sodium hydroxide and potassium hydroxide, and potassium hydroxide is preferably used. The inorganic base is preferably contained at a concentration of 0.1 to 10% by weight, more preferably a concentration of 0.1 to 5% by weight, based on the total mass of the ink release agent. Further, the pH of the cleaning agent is preferably 10 or more, preferably 11 or more, preferably 12 or more.

The cleaning agent 2 may contain water. When the cleaning agent 2 contains water, the operational stability and environmental stability for the cleaning agent 2 can be improved. The amount of the water contained is preferably 80% by mass or less, based on the mass of the release agent. When the amount of the water contained is more than 80% by mass, in view of separating the laminate into individual single layers or releasing the ink layer, it is difficult to obtain satisfactory effects.

The ratio of the water-soluble solvent and water used can be appropriately controlled from the viewpoint of the release effect for the plastic film and the ink layer and safety, but is preferably in the range of water-soluble solvent:water = 20:80 to 100:0, in terms of a mass ratio. The lower limit of the ratio of the water-soluble solvent to the total mass of the water-soluble solvent and water is preferably 20% by mass, preferably 30% by mass, preferably 50% by mass, preferably 70% by mass, preferably 80% by mass, preferably 90% by mass, preferably 100% by mass.

The cleaning agent 2 may contain a surfactant. With respect to the surfactant, there is no particular limitation, and a surfactant similar to those mentioned above in connection with the cleaning agent 1 can be used.

In the cleaning agent 2, the surfactants can be used individually or in combination. The amount of the surfactant added is preferably in the range of 5% by mass or less, preferably 2% by mass or less, based on the total mass of the release agent. The lower limit of the amount of the surfactant added is not particularly limited, and may be 0% by mass, but, when a surfactant is contained, the amount of the surfactant added is preferably 0.01% by mass or more.

(Liquid temperature)

With respect to the temperature of the water or the cleaning liquid used in the wet crushing step, there is no particular limitation as long as the liquid state can be maintained, but, generally, the wet crushing step is preferably conducted at a liquid temperature of 15 to 90°C. When an aqueous cleaning liquid having a surfactant and the like added to water is used, it is preferred that the liquid temperature is controlled according to the type of the surfactant. The optimum temperature for achieving excellent cleaning effect varies depending on the type of the surfactant, but is preferably, for example, 40°C or higher, preferably 65°C or higher, preferably 85°C or higher.

Meanwhile, for improving the crushing properties for the plastic film, namely, for more finely crushing the plastic film, it is preferred that the liquid temperature is not too high, and thus the liquid temperature is preferably 40°C or lower, preferably 30°C or lower, preferably 20°C or lower.

(Plastic film laminate)

The plastic film laminate is a plastic film laminate having at least two layers, and is a laminate having at least a plastic film layer and a layer selected from a plastic film layer, a deposited film layer, and a metal foil layer, and, more specifically, the plastic film laminate is preferably a laminate having laminated a plurality of layers, such as a plastic film having formed thereon an ink layer, an adhesive layer, or the like, and another plastic film. With respect to the laminate, there is no particular limitation, and examples include a laminated film having film layers laminate-bonded using a reactive adhesive, which is for use in food packaging or articles for daily use, but, needless to say, a laminated film having film layers laminate-bonded using a non-reactive adhesive, for example, a thermoplastic resin adhesive and a laminated film obtained due to heat fusion by an extrusion lamination method also can be separated into single-layer films and recovered by the separation and recovery method in the invention. Further, the laminate may be in a sheet form or a container form.

That is, the characteristic feature of the present invention resides in that the plastic film laminate having various types of resin layers, which is disposed of for recycling, can be treated as such without a particular need to further sort the laminate.

Although the thickness of the plastic film laminate depends on the number of laminated layers and the stiffness of the film, the thickness of the plastic film laminate is preferably 20 to 100 $\mu$m, and more preferably 30 to 80 $\mu$m.

Further, for example, in a container, such as a PET (or plastic) bottle, a shrink label which is a laminated film formed into a cylinder is used for indicating a product name and the like or imparting decoration, and, when recycling such a PET bottle, generally, a consumer removes the shrink label and separately disposes of a PET bottle body and the shrink label, but, in the separation and recovery method in the invention, with respect to the PET bottle which is even in the state that the PET bottle body and the shrink label are unified, it is possible to separate the shrink label from the PET bottle body and to separate the shrink label into single-layer films.

The laminated film having film layers laminate-bonded using a reactive adhesive generally has a structure such that an adhesive layer formed from the reactive adhesive is laminated between at least two resin film layers or a metal foil or a deposited film layer. Specifically, with respect to the laminated film, when a resin film layer is expressed as (F), a metal foil layer, such as a metal foil or a deposited film layer, is expressed as (M), and an adhesive layer, such as the reactive adhesive, is expressed as (AD), the following constructions are considered as specific modes of the laminated film, but, needless to say, the laminated film is not limited to the following constructions:

(F)/(AD)/(F),
(F)/(AD)/(F)/(AD)/(F),
(F)/(AD)/(M)/(AD)/(F),
(F)/(AD)/(M),
(F)/(AD)/(M)/(F),
(F)/(AD)/(F)/(AD)/(M)/(AD)/(F),
(F)/(AD)/(M)/(AD)/(F)/(AD)/(F),
(M)/(AD)/(F)/(AD)/(M),
(AD)/(F)/(AD)/(M),
(AD)/(F)/(AD)/(F)/(AD), and the like.

The laminated film that is an object of the separation and recovery method in the invention may further have a paper layer, an oxygen absorbing layer, an anchor coat layer, an ink layer, a release primer layer formed for facilitating release of an ink, or the like.

The release primer layer is a layer formed for facilitating release of a layer, such as an ink layer formed on the plastic film, and is preferably a layer which exhibits releasing properties from the substrate due to an interaction between a cleaning agent and the release primer layer. For example, when a cleaning agent, such as an alkaline aqueous solution, is used, the release primer layer preferably contains a binder resin or adhesive having an acid value. By virtue of such a release primer layer, removal of the ink layer and release of the plastic film laminate can be more effectively made.

The ink layer is a printing ink layer which is printed using an organic solvent printing ink or an aqueous or active energy ray curing ink and using, for example, a gravure printer, a flexographic printer, an offset printer, or an inkjet printer. The ink layer may be a multicolor printing ink layer using a plurality of ink types. In the invention, by conducting the steps 1 and 2, the ink layer can be released irrespective of the type of the ink.

With respect to the place where the ink layer is formed, there is no particular limitation. For example, the ink layer may be formed as the outermost layer of the laminated film, or may be formed between the resin film layer (F) and the adhesive layer (AD). When the ink layer is formed between the resin film layer (F) and the adhesive layer (AD) (backing printing), the ink layer and the adhesive layer are more firmly bonded, and hence release of the ink layer is more difficult, but, even in the backing printing construction, the ink layer can be effectively released by the method of the invention.

For example, with respect to the construction of the laminate, (F1)/INK/(AD)/(M)/(F2) or (F1)/INK/(AD)/(F2) construction is a laminate construction such that the ink layer is present between the layers constituting the laminate and the ink layer and the adhesive layer are more firmly bonded, and hence it is difficult to separate these layers into individual single layers and to remove the ink layer, but, when the crushed material in a state that part of the F2 film is peeled or the F2 is easily peeled is obtained in the step 1, the remaining constituting layers can be easily released and the ink layer can be removed in the step 2.

When classifying the required role of the resin film layer (F), the resin film layer (F) serves as a substrate film layer (F1), a sealant layer (F2) which constitutes a heat-sealing part when forming a packaging material, and the like.

Examples of resin films which serve as the substrate film layer (F1) include polyolefin films, such as low-density polyethylene, high-density polyethylene, linear low-density polyethylene, OPP ((biaxially) oriented polypropylene), and CPP (cast polypropylene); polyester films, such as polyethylene terephthalate (PET) and polybutylene terephthalate; polyamide films, such as nylon 6, nylon 6,6, and metaxyleneadipamide (N-MXD6); biodegradable films, such as polylactic acid; a polyacrylonitrile film; a poly(meth)acrylic film; a polystyrene film; a polycarbonate film; an ethylene-vinyl acetate copolymer saponification product (EVOH) film; a polyvinyl alcohol film; K Coat, such as polyvinylidene chloride; and these films containing a pigment. A transparent deposited film obtained by depositing alumina, silica, or the like on the above film can be used.

Further, the surface of the film material may have been subjected to surface treatment, such as a flame treatment, a corona discharge treatment, or a chemical treatment of a primer or the like.

A flexible polymer film which serves as the sealant layer (F2) is preferably a polyolefin film, such as a polyethylene film, a polypropylene film, or an ethylene-vinyl acetate copolymer film, a film of an ionomer resin, an EAA resin, an EMAA resin, an EMA resin, an EMMA resin, or a biodegradable resin, or the like. When using general names, as examples of such films, there can be mentioned a CPP (cast polypropylene) film, a VMCPP ((aluminum) vacuum metallized cast polypropylene) film, an LLDPE (linear low-density polyethylene) film, an LDPE (low-density polyethylene) film, an HDPE (high-density polyethylene) film, a VMLDPE ((aluminum) vacuum metallized low-density polyethylene) film, and these films containing a pigment. The surface of the film may have been subjected to surface treatment, such as a flame treatment, a corona discharge treatment, or a chemical treatment of a primer or the like. It is preferable that the resin film layer (F) (plastic film) contains at least a polypropylene resin.

As examples of the metal foil layer (M), there can be mentioned foils of a metal having excellent malleability and ductility, such as gold, silver, copper, zinc, iron, lead, tin, or an alloy thereof, steel, stainless steel, or aluminum.

Examples of paper layers include natural paper and synthetic paper. The first and second sealant layers may be formed from a material similar to those for the above-mentioned sealant layer.

An additional layer may contain a known additive or stabilizer, for example, an antistatic agent, a non-reactive adhesive layer, an easy bonding coat agent, a plasticizer, a lubricant, an antioxidant, or the like.

The crushed material obtained by crushing the plastic film laminate using the above-mentioned wet crusher is melted and then processed by molding using a molding machine into recycled plastic pellets. That is, the crushed material of the plastic film laminate can be advantageously used as a material for processing recycled plastic pellets.

An example of specific embodiment of the recycling method for a plastic film laminate of the present invention is described below. The method described below is merely an example, and is not construed as limiting the present invention.

(1) Sorting waste plastics

Waste plastics including simple packaging materials made of a plastic are collected by a facility having a recycling system for producing recycling raw materials. The waste plastics, which are in a state that not only plastic films but also molded plastics are mixed into the waste, are preferably sorted and separated into molded articles and plastic films in the form of a film or sheet. Further, when the collected waste plastics have mixed thereinto foreign matter, such as soil or sand, glass, pottery, or a metal, the foreign matter is preferably removed. Examples of methods of removing the foreign matter or sorting the plastics include an inspection and manual sorting operation by human hands, removing small-size foreign matter using a sieve, removing metals by magnetic sorting using magnetic force, wind force sorting that separates plastics and foreign matter having different specific gravities using wind force, and sorting using a sensor. There is a case where sorting need not be made depending on the state of foreign matter mixed into the waste plastics.

(2) Cutting

The waste plastics containing the sorted plastic film laminate may be cut into plastic pieces, for example, having a size of about 30 cm square. By virtue of the cutting step, crushing by means of a wet crusher in the next step can be more efficiently conducted. In cutting, a known crusher can be used, and examples include impact type crushers, such as a hammer crusher and a rotary crusher, a shredder, and a cutter. With respect to the size and form of the cut plastic film laminate pieces, there is no particular limitation, but the maximum length of the plastic pieces is preferably, for example, 50 cm or less, preferably 30 cm or less, preferably 20 cm or less, preferably 10 cm or less. By virtue of the cutting step, crushing by means of a wet crusher in the next step can be more efficiently conducted.

After the cutting step, the sorting operation for plastics as conducted in item (1) above may be further conducted, or cutting in item (2) may be conducted before sorting the waste plastics in item (1) above. Alternatively, wet crushing in the next step may be performed without conducting cutting.

(3) Crushing step for the plastic film laminate

The collected plastic pieces are successively charged into a wet crusher filled with water or a cleaning agent to obtain a plastic crushed material. For example, the laminated film, which is obtained by cutting a laminated film roll into a size of about 30 cm square, is introduced into the crushing portion by suction of the wet crusher and crushed into about 5 to 20 mm, and pumped to the next step at 0.03 $m^3$ /min. In this instance, the charged film receives high shear when being crushed, so that at least part of the layers constituting the laminated film is likely to be separated into individual single layers. In the crushing step, the surface roughness Sa can be controlled to be 0.7 $\mu$m or more by appropriately changing the water amount, the number of revolutions, or the time for the crushing step. It is preferred that the water amount is increased or the number of revolutions is controlled for creating conditions such that the plastic film laminate is likely to be vigorously stirred and crumpled or compressed by blades. When the laminated film has an ink layer formed thereon, it is preferred that the ink layer is likely to be released or removed from the film due to high shear caused by crushing, and at least part of the ink layer is released.

Even when an object to be subjected to wet crushing is not the laminated film roll but film bags recovered from the market, the bags in the state just after recovered can be charged into the wet crusher.

The step using wet crushing may be conducted once or two or more times. Specifically, procedure may be performed such that wet crushing is conducted once, and then the step of recovering the crushed material is conducted, or the wet crushing step is conducted two or more times, and then the recovery step for the crushed material is conducted. Further, when the wet crushing is conducted two or more times, the cleaning agent may be changed for the individual steps. Further, in the wet crushing step, a known step, such as washing with water, water removal, dehydration, or drying, may be appropriately added.

Further, after the wet crushing step, an additional step for more surely removing the ink layer or the adhesive layer deposited on the plastic film may be provided. Examples of the additional steps include the step of stirring the crushed material of the plastic film in a container filled with a cleaning agent while heating if necessary to release the ink layer or the adhesive layer. With respect to the cleaning agent used in the additional step, the above-mentioned cleaning agent 2 is preferably used. In the case of the printed material by backing printing, which is composed of a laminated film having a plastic film laminate-bonded using a reactive adhesive, and which has an ink layer between the film layer and the adhesive layer, the multilayer film can be released into the individual layers by crushing the multilayer film in water in the wet crushing step, and hence, when the resultant film is subsequently stirred at a low speed in a cleaning agent in the above-mentioned additional step, even the printed material by backing printing is improved in the removal rate of the ink layer or the adhesive layer.

(4) Recovery step for the crushed material of the plastic film

After the step in item (3) above, the crushed material of the plastic film laminate is obtained. The crushed material is in a state that the individual single layers are separated. Further, the ink layer or adhesive layer separated from the laminated film may be dissolved depending on the type of the cleaning agent, but generally is not dissolved in the water or cleaning agent but is present as a residue in the cleaning liquid. That is, in the water or cleaning agent in the wet crushing step, the separated single-layer films of individual layers and a residue, such as the adhesive, printing ink, or metal foil, are suspended or dissolved. These are removed from the water or cleaning agent, and then sorted and recovered.

An example of a specific method is as follows. For example, in floatation sorting, a plastic having a smaller specific gravity (floating material), e.g., a polyolefin, such as polypropylene or polyethylene, and a condensation synthetic film having a specific gravity larger than that of a polyolefin, such as polyester or nylon, or a mass material, such as a metal foil, are sorted, and the mass material is removed, and then the recovered plastics are cleaned and dehydrated in the cleaning and dehydration step, and the plastics having different specific gravities are sorted by centrifugal separation. For example, the plastics can be separated into plastic separated materials containing a vinyl chloride resin, polyethylene terephthalate, and the like, which have a specific gravity of 1 or more and settle in water, and plastic separated materials containing no vinyl chloride resin and containing olefin resins, such as polyethylene and polypropylene. The separated materials can be further sorted by controlling the specific gravity by appropriately changing the ratio of the liquid used in floatation sorting, for example, water and the organic solvent or salt incorporated.

Rough sorting by specific gravity separation and recovery are conducted, and then fine sorting may be conducted using electrostatic separation utilizing inherent electrostatic properties of a plastic or the like.

An example of a specific method includes a method in which a plastic mixture is separated by permitting the preliminarily charged plastic mixture to fall between parallel plane electrodes to which a voltage is applied. The method can sort a combination of plastics which have so small difference in specific gravity that the plastics cannot be separated by specific gravity separation.

(5) Recovery and reuse of the cleaning solution

For recovering the cleaning agent, the water or cleaning agent used in the wet crushing step is fed to at least one cleaning agent recycling apparatus selected from a filtration apparatus, a centrifugal separator, and an ultrafiltration apparatus to remove the solid material, and then reused. While performing the wet crushing step and specific gravity separation step in the steps 1 and 2, the reuse step for the water or cleaning agent can be continuously conducted to separate the solid material from the cleaning agent.

(6) Drying the plastic crushed material

The single-layer plastic crushed material obtained in the above-mentioned recovery step (4) for the crushed material, specifically, single-layer film pieces are obtained, and then the film pieces are dried by at least one drying method selected from vacuum drying by heating, hot-air drying, and compression drying for removing the residual water. These methods can be used in combination. As a pretreatment for production of recycled pellets in the step 5, from the film pieces which have been dried or are being dried, briquette may be produced using a compressor, such as a briquetting machine.

(7) Production of recycled plastic pellets (step 5)

The film pieces or briquette dried in the drying (6) for the plastic crushed material is charged into a single-screw and twin-screw molding machine to produce recycled plastic pellets. With respect to the conditions for the kneader, there is no particular limitation, but an operation at 180 to 280°C is preferred for preventing marked deterioration of the resin performance before recycled.

In the invention, the reason that, while crushing the plastic film in water or a cleaning agent in the wet crushing step, separation of the plastic film laminate into the individual single layers and release or removal of the ink layer from the plastic film can be simultaneously conducted is presumed as follows. High shearing force caused by the wet crushing pump when crushing the plastic film has an effect on not only crushing of the film but also both separation of the laminate and removal of the ink layer. The shearing force by the wet crushing pump is so high in shearing force that the laminate is crushed, and thus a high-speed stirring machine, an ultrasonic cleaning machine, and the like cannot easily achieve removal of the ink layer and separation of the laminate into individual single layers.

The thus obtained recycled plastic pellets are produced by processing the crushed material of the plastic film separated into individual single layers, and the crushed material is advantageous in that the ink layer formed on the laminate can be removed, and the obtained recycled plastic pellets are not colored unlike conventional recycled plastic pellets, and can be improved in quality. Therefore, the obtained recycled plastic pellets can be processed into various products as a high-quality material like a virgin plastic material. With respect to the material for the recycled plastic pellets, various types of plastic pellets can be produced according to the material for the recovered plastic film as a raw material. Preferred materials are polyolefin resins, such as low-density polyethylene, high-density polyethylene, linear low-density polyethylene, OPP ((biaxially) oriented polypropylene), and CPP (cast polypropylene), and polyester resins, such as polyethylene terephthalate (PET) and polybutylene terephthalate.

EXAMPLES

Hereinbelow, the contents and effects of the present invention are described in more detail with reference to the following Examples. Further, the films, printing inks, reactive adhesives, and organic solvents used as raw materials in the following Examples and Comparative Examples are shown below.

(Films used in laminated film)

OPP: (Biaxially) Oriented polypropylene film; 20 $\mu$m
CPP: Cast polypropylene film; 30 $\mu$m

(Printing ink)

INK 1: FINART R507 primary color indigo, manufactured by DIC Graphics Corporation
INK 2: FINART R794 white S, manufactured by DIC Graphics Corporation

(Reactive adhesive)

AD 1: Solvent adhesive; Two-part adhesive (ether adhesive) of DICDRY LX-470EL and SP-60 (manufactured by DIC Corporation)
AD 2: Solvent-less adhesive; Two-part adhesive (ester adhesive) of DICDRY 2K-SF-400A and HA-400B (manufactured by DIC Corporation)

(Method for producing a plastic film laminate)

A plastic film laminate was prepared by printing a film by the printing method described below, and then laminating the printed film on another film by the laminating method described below. The layer construction of the film and the types of the reactive adhesive and printing ink were according to the combination shown in Table 1.

(Printing method)

With respect to the gravure ink which is the printing ink, each ink was applied using a proofer to a film "Film 1".

(Laminating method)

A reactive adhesive "AD" was applied by a laminator to the surface of the film "Film 1", to which the printing ink was applied, so that the coating weight became 3 g/m$^2$ , in terms of the amount of the solids, and laminated on a film "Film 2". The resultant laminated film was subjected to aging reaction at 40°C for 72 hours. Laminated films "LAM 1" and "LAM 2" shown in Table 1 were obtained.

[Table 1]

| Laminated film construction | Film 1 | Ink 1 | Ink 2 | Ad | Film 2 |
|---|---|---|---|---|---|
| LAM 1 | OPP | INK 1 | INK 2 | AD 1 | CPP |
| LAM 2 | OPP | INK 1 | INK 2 | AD 2 | CPP |

The laminated films "LAM 1" and "LAM 2" were individually cut into a 2 cm × 6 cm size to obtain a test specimen.

(Crushing step)

The test specimen was crushed in water or a cleaning agent shown in Table 3 according to PRO 1 to PRO 6 methods.

PRO 1: Using MultiDrive, manufactured by IKA, an operation was performed at 20,000 rpm for 2 minutes.
PRO 2: Using Disc Refiner, manufactured by Aikawa Iron Works Co., Ltd., an operation was performed at a circumferential speed of 25 m/s for 3 minutes.
PRO 3: Using High-speed mixer, model FS2, manufactured by Earthtechnica Co., Ltd., an operation was performed at 2,000 rpm for 30 minutes.

PRO 4: Using FM Mixer, manufactured by Nippon Coke & Engineering Co., Ltd., an operation was performed at 4,000 rpm for 10 minutes.

PRO 5: Using a homodisper, while maintaining the liquid temperature at 70°C, stirring was performed at 200 rpm for 10 minutes.

PRO 6: Using Mighty Blender, manufactured by Osaka Chemical Co., Ltd., an operation was performed at 19,000 rpm for 2 minutes.

(Ink cleaning agent)

Water, a surfactant shown in Table 3 (cationic surfactant, M2-100R (NOF Corporation)) in an amount of 0.3% by weight, a water-soluble solvent shown in Table 2, and potassium hydroxide in an amount of 2% by weight were mixed to prepare an ink cleaning agent shown in Table 3.

[Table 2]

| Water-soluble solvent | Compound name |
| --- | --- |
| SOL 1 | Ethanol |
| SOL 2 | 3-Methoxy-3-methyl-1-butanol |

[Table 3]

| Ink cleaning agent | ABS 1 | ABS 2 | ABS 3 | ABS 4 |
| --- | --- | --- | --- | --- |
| Potassium hydroxide | - | O | O | O |
| Surfactant | - | - | - | O |
| Water-soluble solvent | - | SOL 1 98% | SOL 2 98% | - |
| Water | O | - | - | O |

In Table 3, water, the surfactant in an amount of 0.3% by weight, or potassium hydroxide in an amount of 2% by weight, which was incorporated into the ink cleaning agent, was indicated by "O". With respect to the water-soluble solvent incorporated, the type was shown in the section of the table at the upper portion, and the amount (% by weight) was shown at the lower portion. The component which was not incorporated was indicated by "-". Further, the composition of the ink cleaning agent shown in Table 3 includes the components read downward in the column, and water was added so that the total of the components became 100% by weight.

(Recovery step)

The plastic crushed material obtained after the crushing step was recovered, and immersed in water to remove the cleaning agent component, and then dried by means of a dryer set at 80°C for 8 hours.

(Surface roughness Sa of the film)

Result 1 in Tables 4 and 5 shows a surface roughness Sa of the plastic crushed material (recovered material). According to PRO 1 to PRO 6, the laminated film was crushed or cleaned, and dried and then, the surface roughness Sa of the film (plastic crushed material) obtained after the crushing step was determined by measuring a surface roughness Sa with respect to an area of 500 $\mu$m $\times$ 600 $\mu$m using a white light interferometric microscope, manufactured by Ryoka Systems Inc. The results were evaluated in accordance with the following criteria.

With respect to the measurement of surface roughness, in the case of the LAM 1 or LAM 2 construction, the laminated film was separated into the OPP layer and the INK/AD/CPP layer, and therefore a surface roughness Sa was measured from the CPP side.

A: 0.9 $\mu$m or more
B: 0.8 $\mu$m to less than 0.9 $\mu$m
BC: 0.7 $\mu$m to less than 0.8 $\mu$m

17

C: 0.5 μm to less than 0.7 μm
D: less than 0.5 μm
A, B, and BC are a range that has no problem from a practical point of view.

(Size of the film after crushed)

Result 2 in Tables 4 and 5 shows a size of the plastic crushed material (recovered material). According to PRO 1 to PRO 6, the laminated film cut into 2 cm × 6 cm was crushed or cleaned, and dried and then, the size of the film (plastic crushed material) obtained after the crushing step was determined by measuring a length in the long-side direction using a ruler, and the results were shown. The results were evaluated in accordance with the following criteria.

A: 5 mm or less
B: 6 mm to 10 mm
BC: 11 mm to 20 mm
D: 21 mm or more, or not crushed at all.

(Ink removing property from the film)

Result 3 in Tables 4 and 5 shows the state of removal of the ink from the laminated film. According to PRO 1 to PRO 6, the laminated film cut into 2 cm × 6 cm was crushed or cleaned, and dried and then, the ink removing property of the printed portion of the film (plastic crushed material) obtained after the crushing step was judged by determining an area by image processing of a photograph taken using an optical microscope and calculating an ink removal rate using the formula shown below. The results were evaluated in accordance with the following criteria.

$$\text{Ink removal rate } (\%)$$
$$= (1 - \text{Ink deposited area after cleaning/Ink deposited area before cleaning}) \times 100$$

A: 100% of the printed portion is removed.
B: 75% to less than 100% of the printed portion is removed.
BC: 50% to less than 75% of the printed portion or laminated portion is removed.
D: Not released or less than 50% is removed.
A, B, and BC are a range that has no problem from a practical point of view.

[Table 4]

| Example | Example 1 | Example 2 | Example 3 | Example 4 |
|---|---|---|---|---|
| Laminated film construction | LAM 2 | LAM 2 | LAM 1 | LAM 1 |
| Crushing step | PRO 1 | PRO 1 | PRO 1 | PRO 2 |
| Cleaning agent | ABS 2 | ABS 3 | ABS 3 | ABS 3 |
| Result 1 | A | A | A | B |
| Result 2 | A | A | A | B |
| Result 3 | A | A | A | B |

[Table 5]

| Comparative Example | Comparative Example 1 | Comparative Example 2 | Comparative Example 3 | Comparative Example 4 |
|---|---|---|---|---|
| Laminated film construction | LAM 1 | LAM 1 | LAM 1 | LAM 1 |
| Crushing step | PRO 3 | PRO 4 | PRO 5 | PRO 6 |

(continued)

| Comparative Example | Comparative Example 1 | Comparative Example 2 | Comparative Example 3 | Comparative Example 4 |
|---|---|---|---|---|
| Cleaning agent | ABS 3 | ABS 3 | ABS 3 | ABS 3 |
| Result 1 | C | C | D | C |
| Result 2 | D | D | D | A |
| Result 3 | D | D | D | D |

Table 4 shows results that when the crushed material had a surface roughness Sa of 0.7 $\mu$m or more, excellent ink removing property from the film was obtained. LAM 1 and LAM 2 have a printing layer formed between the layers of the laminate and, namely, are printed by backing printing, and thus the ink removing property that is excellent or not can be used as an index of separation of the laminate into individual single layers. In Examples 1 to 4, the laminate was able to be separated into individual single layers, and, from the results, it was found that the laminate had excellent ink removing property.

In contrast, in Comparative Examples 1 to 4, when the crushed material had a surface roughness Sa of less than 0.7 $\mu$m, the ink removing property was poor, and, from the results, it was found that separation of the laminate into individual single layers was unsatisfactory. Despite the crushed material which was crushed into a size as small as the size in Examples 1 to 4, Comparative Example 4 was poor in the ink removing property, as compared to Examples 1 to 4. From this result, it was found that not only crushing the laminate in water or a cleaning agent but also controlling the surface roughness Sa to be 0.7 $\mu$m or more are important. Further, for achieving the crushed material having a surface roughness Sa of 0.7 $\mu$m or more, applying stimuli, such as pumping, crumpling, and beating, to the laminate in water or a cleaning agent is effective.

Then, the crushing step was conducted using ABS 1 (water) under the shown conditions for the water amount, number of revolutions, and operation time according to PRO 1 (step 1), and then the ink removing step was conducted using ABS 3 as a cleaning agent according to PRO 6 (step 2). The results are shown in Table 6. Result 1 and Result 2 show results of evaluation made after the step 1, and Result 3 shows results of evaluation made after the step 2.

[Table 6]

| | Comparative Example 5 | Comparative Example 6 | Comparative Example 7 | Example 8 | Example 9 | Example 10 | Example 11 | Example 12 | Example 13 |
|---|---|---|---|---|---|---|---|---|---|
| Laminated film construction | LAM 1 | LAM 1 | LAM 1 | LAM 1 | LAM 1 | LAM 1 | LAM 1 | LAM 1 | LAM 1 |
| Step 1 | PRO 1 | PRO 1 | PRO 1 | PRO 1 | PRO 1 | PRO 1 | PRO 1 | PRO 1 | PRO 1 |
| Cleaning agent for step 1 | ABS 1 | ABS 1 | ABS 1 | ABS 1 | ABS 1 | ABS 1 | ABS 1 | ABS 1 | ABS 1 |
| Water amount (mL) | 200 | 200 | 200 | 200 | 200 | 200 | 1000 | 1000 | 1000 |
| Number of revolutions (rpm) | 15000 | 15000 | 15000 | 20000 | 20000 | 20000 | 20000 | 20000 | 20000 |
| Operation time (s) | 60 | 90 | 120 | 60 | 90 | 120 | 60 | 90 | 120 |
| Step 2 | PRO 5 | PRO 5 | PRO 5 | PRO 5 | PRO 5 | PRO 5 | PRO 5 | PRO 5 | PRO 5 |
| Cleaning agent for step 2 | ABS 3 | ABS 3 | ABS 3 | ABS 3 | ABS 3 | ABS 3 | ABS 3 | ABS 3 | ABS 3 |
| Result 1 | D | D | D | BC | B | A | A | A | A |
| Result 2 | C | C | C | B | B | A | A | A | A |
| Result 3 | C | C | C | BC | B | B | B | B | A |

Table 6 shows results that when the crushed material had a surface roughness Sa of 0.7 μm or more, excellent ink removing property from the film was obtained. By controlling the water amount or the number of revolutions so that the crushed material has a surface roughness Sa of 0.7 μm or more, separation of the plastic film laminate into individual single layers and the ink removing property can be improved.

**Claims**

1. A recycling method for a laminate, comprising crushing a plastic film laminate having at least two layers in water or a cleaning agent simultaneously with conducting pumping so that the crushed material obtained by crushing the laminate has a surface roughness Sa of 0.7 μm or more.

2. The recycling method for a laminate according to claim 1, wherein the laminate is a laminate having an ink layer on at least one plastic film.

3. The recycling method for a laminate according to claim 2, wherein the ink layer on the plastic film is removed.

4. The recycling method for a laminate according to any one of claims 1 to 3, wherein the crushed material has a length of 20 mm or less in the long-side direction and a length of 20 mm or less in the short-side direction.

5. The recycling method for a laminate according to any one of claims 1 to 4, wherein the plastic film contains at least a polypropylene resin.

6. The recycling method for a laminate according to any one of claims 1 to 5, wherein the crushed material has a single-layer structure which corresponds to each of separated layers of the laminate.

7. The recycling method for a laminate according to claim 6, wherein the crushed material having a single-layer structure is sorted in terms of each layer and recovered.

8. The recycling method according to claim 7, wherein the recovered crushed material is melted and then molded to obtain a recycled plastic.

9. A method for producing a recycled plastic processing material, comprising crushing a laminate having at least a plastic film layer and a layer selected from a plastic film layer, a deposited film layer, and a metal foil layer in water or a cleaning agent simultaneously with conducting pumping so that the crushed material obtained by crushing the laminate has a surface roughness of 0.7 μm or more.

10. A recycled plastic processing material, which is obtained by the method according to claim 9.

Europäisches
Patentamt

European
Patent Office

Office européen
des brevets

# EUROPEAN SEARCH REPORT

Application Number

**EP 22 19 0036**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2021/230033 A1 (DAINIPPON INK & CHEMICALS [JP]) 18 November 2021 (2021-11-18) * paragraphs [0046], [0059]; claims; examples * ----- | 1-10 | INV. B29B17/02 ADD. B29L9/00 |
| X | JP H08 164524 A (TEIJIN LTD; TEIJIN ENG) 25 June 1996 (1996-06-25) * paragraphs [0001] – [0002], [0013], [0051], [0061]; claims; examples * ----- | 1-10 | |
| X | US 2018/029088 A1 (TACKETT STEPHEN CRAIG [US] ET AL) 1 February 2018 (2018-02-01) * paragraph [0003]; claims; examples * ----- | 1-10 | |

TECHNICAL FIELDS
SEARCHED       (IPC)

B29B
B29L
B32B

The present search report has been drawn up for all claims

| Place of search | Date of completion of the search | Examiner |
|---|---|---|
| Munich | 11 January 2023 | Dossin, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 19 0036

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2023

| Patent document cited in search report | | Publication date | Patent family member(s) | | Publication date |
|---|---|---|---|---|---|
| WO 2021230033 | A1 | 18-11-2021 | CN | 115515769 A | 23-12-2022 |
| | | | JP | 7060173 B2 | 26-04-2022 |
| | | | JP | 2022068217 A | 09-05-2022 |
| | | | JP | WO2021230033 A1 | 18-11-2021 |
| | | | WO | 2021230033 A1 | 18-11-2021 |
| JP H08164524 | A | 25-06-1996 | NONE | | |
| US 2018029088 | A1 | 01-02-2018 | CA | 3032129 A1 | 01-02-2018 |
| | | | CN | 109789601 A | 21-05-2019 |
| | | | US | 2018029088 A1 | 01-02-2018 |
| | | | WO | 2018022711 A1 | 01-02-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015520684 T
- JP 2016509613 T
- JP 2018514384 T

**Non-patent literature cited in the description**

- *Science Advances,* 19 July 2017, vol. 3 (7), e1700782